# EUROPEAN PATENT APPLICATION

(11) **EP 2 233 354 A1**
(43) Date of publication of application: **29.09.2010**
(21) Application number: 09425119.6
(22) Date of filing: 26.03.2009
(51) Int. Cl.: B60P 1/26

(54) **Column for the tilting back side of vehicle's dump bodies**

(71) Applicant: Officine Cusini S.r.L., 50052 Certaldo (FI) (IT)
(72) Inventor: Cucini, Fabio, 50052 Certaldo (FI) (IT)
(74) Representative: Turini, Laura

(57) **Abstract**

The present invention refers to a dumping body (1) for vehicles in general comprising at least a tilting side (3) and at least a column (7) to which the side is connected. According to such assembling configuration, the side results thus oscillating between an opening position in correspondence of a turnover of the body and a closing position near the column when the body approaches the transporting position and vice-versa.

According to the present invention the column and the side are configured and reciprocally combined to each other in such a way that in correspondence of the transporting position of the body (1) the barycentre **G** of the side results spaced of a predetermined arm **d** respect to the pivoting axis of the side to the column (7), in such a way that the weight force **F** of the side creates a closing moment **M** that pushes the side (3) against the column (7).

## Description

### Technical Field

The present invention refers to the technical field of vehicles for the transportation of material in general, as light vans, trucks and similar and supplied with dump body. In particular the invention refers to a new type of supporting back column for the back side of the dump body.

### State of the Art

Nowadays are well known vehicles supplied on the back with body for the transportation of material in general. A typical example is relative to the transportation of construction material as ground, cement, or differently waste material. For such aim the body, generally with a rectangular or quadrangular shape, comprises four lateral sides that surround it defining a containment barrier to impede the exit of the transported material.

In order to facilitate the discharging operations are used since a long time the dump bodies. The dump body result to be extremely useful as it allows to easily empty the load discharging it on the ground in the chosen place and without requiring the operator to remove it manually from the same body.

For such aim the body is supplied with specific pistons placed for the lifting operation of the same and consequent turn over. More precisely, the pistons make the lifting of the body respect to one of its hinging line causing its lateral or back rotation in relation to the same hinging. In such manner it is determined the sliding of the material, because of the gravity, contained in it. A lateral turnover implies a rotation of the body on one of its sides while a back turnover implies a rotation in correspondence of the back part of the same body. In the first case the material will fall in correspondence of the vehicle's side and in the other case at the back of the same.

The body, with the aim to allow the exit of the material contained in it, is thus provided with tilting sides placed on the side where the turnover happens. In such manner the sides result oscillating when opening and closing further to the turnover of the body. The body is thus provided with columns, called also stud or post, to which the sides are hinged generally in correspondence of their upper ends. For example, in the case of a back turnover body, this is supplied with two columns placed at the two back angles of the body and on which it is hinged the side that encloses the entire back side of the body. The three remaining sides are generally fixed.

In use, when the body is inclined for the discharging, the gravity force of the side applied to its barycentre tends to move respect to the hinging axis of the same side. In such manner it is created an arm **d** between the hinging axis of the side and the barycentre on which it is applied the gravity force. The above mentioned arm **d** combined to the gravity force **F** determinates a rotation moment of the same opening side made to annul such arm. During the following returning phase of the body into the horizontal or transporting position, or rather parallel to the supporting ground of the vehicle, the mentioned arm tends to decrease bringing back the side towards the closing position respect to the body close to the column.

Appropriate blocking means, as for example common hooks, bind the side to the base of the body. In such manner, during the usual transportation, the side is impeded to oscillate and accidentally open, for example because of jumps of the vehicle with the uneven ground, causing this way the accidental loss of the transported material.

Nowadays there are different closing/opening solution of the side that can comprise hooks that are operable manually by the user once the body is placed in the horizontal or inclined position, or automated hooks. While in the first case the user is forced to get off the vehicle in order to put into safety condition or in opening condition the side, in the second case the hooks are operated automatically.

However the use of the nowadays solutions of sides and columns that are reciprocally connected to each other is not free of inconvenient.

The nowadays constructive solutions comprise indeed a reciprocal arrangement between the side and the column such for which the mentioned **d** arm, when the body is substantially placed into the horizontal or transporting position, is null. In such case then it is clear how the same closing could be not much functional, especially when the reaching of such position is closed, given that the rotation moment resulting on the side is almost null.

This implies the inconvenient that the side does not lean on the column in a correct manner but it lightly remains spaced out from it. The problem, moreover, if highly accentuated when the vehicle is not perfectly placed in the horizontal position because of the deformed or protruding ground. It is anyway clear how the closing functionality is depending on the shape or protuberance of the ground on which the vehicle leans. In the case thus are used the automatic closing means, these are surely not suitable to grab or block the side as this last one is not correctly placed in the closed position respect to the column. This implies that the operator has to get off from the vehicle and operate the closing manually. The inconvenient is more accentuated in the case where the pivoting is partially corrupted by residuals of dirt, applying a braking action to the rotation that makes the reaching of the closing position harder. Moreover, in the specific case of automatic actuations, the dirt effect in the pivoting or the light slope of the ground can delay the closing motion of the side in the approaching phase of the column, causing the displacement of the synchronization with the closing hooks. In such case the hooks would be actuated when the side is still far away from the closed position respect to the column.

Similarly, in the case of manual hook means, it is necessary that the operator applies a great pressure to push the side against the mast and operate the closing. Sometimes, especially in the case of jamming of the hinges, such pressure is considerable, making the operation difficult.

### Disclosure of Invention

It is therefore the aim of the present invention to give a dump body for vehicles that resolves the above mentioned inconvenient.

In particular it is the aim of the present invention to give a dump body for vehicles which guarantees, during the dumping phase of the body towards the transportation configuration, an efficient closing of the tilting side against the column.

Particularly, in the case where automatic blocking means of the side are used, it is the aim of the present invention to give a dump body where the side dumps in advance towards the column respect to the hooking motion of the blocking means, maintaining this way the side in its position against the column even in the conditions where the ground is irregular or with a light slope and allowing an efficient and functional closing.

It is also the aim of the present invention to give a dump body where the side dumps towards the column also in the case of pivoting to the worn, non correctly functioning column or in the presence of contained quantity of dirt residual.

These and other aims are obtained by the present dump body (1) for vehicles in general comprising at least a tilting side (3) and at least a column (7) to which the side is connected in a way that the side can oscillate between an opening position in correspondence of a turnover of the body and a closing position close to the column when the body reaches the transporting position and vice-versa and characterized by the fact that the column and the side are reciprocally arranged to each other in a way that in correspondence of such closing position of the side the barycentre **G** of the side results spaced of a predetermined arm **d** respect to the pivoting axis of the side respect to the column (7) in such a way that the weight force **F** of the side creates a moment of closing **M** that pushes the side (3) against the column (7).

According to such solution and reciprocal combination between the side and the column, it is thus generated an **M** moment that constantly pushes the side against the column even in the approaching phase of the side towards the column, or rather when the side is practically close to the column. This solution allows thus an efficient closing as, in normal conditions, it anticipates the closing motion respect to the drive of the eventual automatic blocking means of the side. This makes the hooks grab always the side without fail. For this reason such solution is efficient even in the case of uneven ground or worn or dirty hinge. In such case the moment **M** that is generated guarantees anyway a closing, at least within the ranges of slope of the ground that are acceptable or anyway given by limited upward projecting bumps.

Advantageously the arm **d** is comprised between a plane (9) and a plane (8) that are respectively parallel, said plane (9) being passing by the point of pivoting (18) of the side to the column (7), parallel to the side (3) and orthogonal respect to the horizontal ground, and said plane (8) passing by the barycentre of said back side (3).

According to the present invention the column (7) comprises a pivoting head (15) for the side and, at the same time, the side (3) comprises at least an arm (10), both configured in such a way that in said transporting position the barycentre **G** of the side results spaced of said arm **d** respect to the pivoting axis of the side to the column (7).

Therefore the particular described geometric solution of column and side allows to realize the mentioned arm in the transporting condition.

Advantageously the head (15) is placed closed to the back face (31) of the column.

According to a possible constructive solution, the column (7) comprises a inclined front face (12) that protrudes extended from the head (15) towards the body for a α angle through a face (14) and the side (3), at the same time, comprises an arm (10) inclined for a corresponding α angle respect to the face (13) in such a way that, in said transporting condition, the face (13) of the side results parallel respect to the face (14) of the column assuring a substantially tight closing.

According to such solution, the arm comprises a insertion slot for a pin (18) for the connection to the column.

Alternatively the column (7) can be of a substantially rectangular shape. In such case the side (3) comprises an arm (10) exiting in an orthogonal manner respect to the same side in such a way that, always in the transporting condition, the face (13) of the side adheres to the face (14) of the column assuring a substantially tight closing.

Advantageously the side (3) is the back side (3), said back side being connected respectively to a first (7) and to a second column (7) placed respectively at the two back angles of the body.

Advantageously the side (3) can be a lateral side (4), said lateral side being connected respectively to a first (7) and to a second column (7) placed respectively at the two lateral angles of the body.

In such case, then, there will be a lateral dumping of the body and a lateral emptying of the same.

Advantageously the column (7) comprises, in correspondence of said head (15), a starting lever (16) to allow to extract or retract a stopper (17) of the head (15).

The stopper allows thus to bind in a pivotable manner the pin of the lever (10).

Alternatively the column (7) comprises a lever (20) placed in the body of the column to operate the retraction or the lifting of the stopper (17) towards/from the head.

According to such further solutions, the arm (10) comprises the pin (18) of connection to the column.

The mentioned invention can also be placed specifically on movable bodies in order to modify them according to what has been described. For such aim it is described a side-column unit applicable to a dump body (1) for vehicles in general, said unit comprising at least a tilting side (3) and at least a column (7) to which the side is connected in a way that the side can oscillate between an opening position in correspondence of a turnover of the body and a closing position close to the column when the body reaches the transporting position and vice-versa and characterized by the fact that the column and the side are reciprocally combined to each other in a way that in correspondence of such transporting position of the body (1) the barycentre G of the side results spaced of a predetermined arm **d** respect to the pivoting axis (18) of the side respect to the column (7) in such a way that the weight force **F** of the side creates an **M** moment of closing that pushes the side (3) against the column (7).

### Brief description of the drawings

Further features and advantages according to the present dump body, according to the invention, will be clearer with the description of one of its pattern realization that follows, made to illustrate but not limit, with reference to the annexed drawings, in which:
- Figure 1 shows a body dumped at the back according to the present invention.
- Figure 2 shows a body in the transporting configuration and highlights the two parallel planes spaced from each other for a predetermined arm **d**.
- Figure 3 shows a lateral and front view of a possible constructive solution of the column according to the present invention.
- Figure 4 shows a column-side coupling further to their assemblage and highlights the rotation moment that is generated on the side further to the respective assemblage between the side and the column.
- Figure 5 and figure 6 show other two realization solution for the column;
- Figure 7 show a section of the column of figure 6 with the aim of highlighting the element that are contained in it.
- Figure 8 shows the body in the transporting position with the blocking means operated to maintain in the position the side to the rest of the body during the normal transportation.
- Figures from 9 to 11 show constructive details of the blocking means.
- Figure 12 show an alternative solution of the column;
- Figure 13 shows the side overturned to allow the loading of materials on the body.

### Description of a preferred embodiment

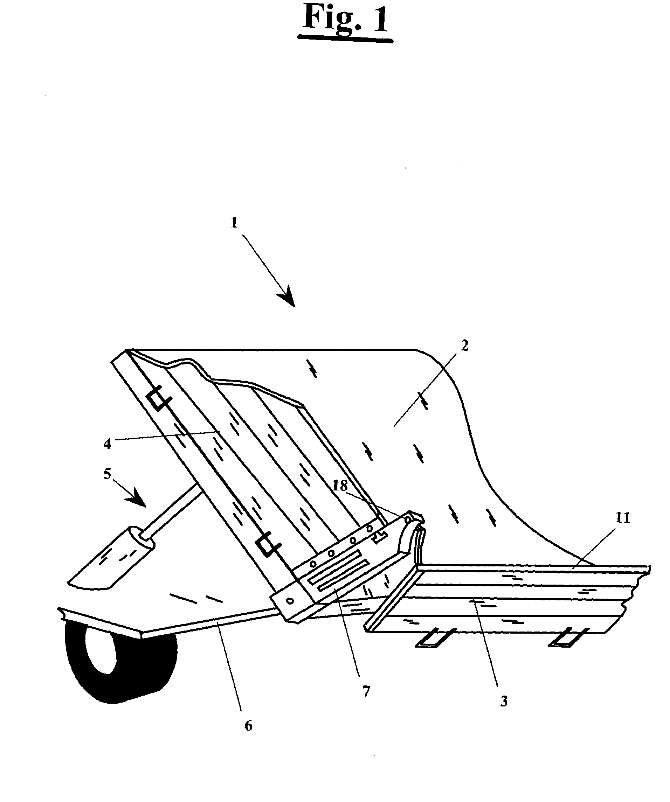

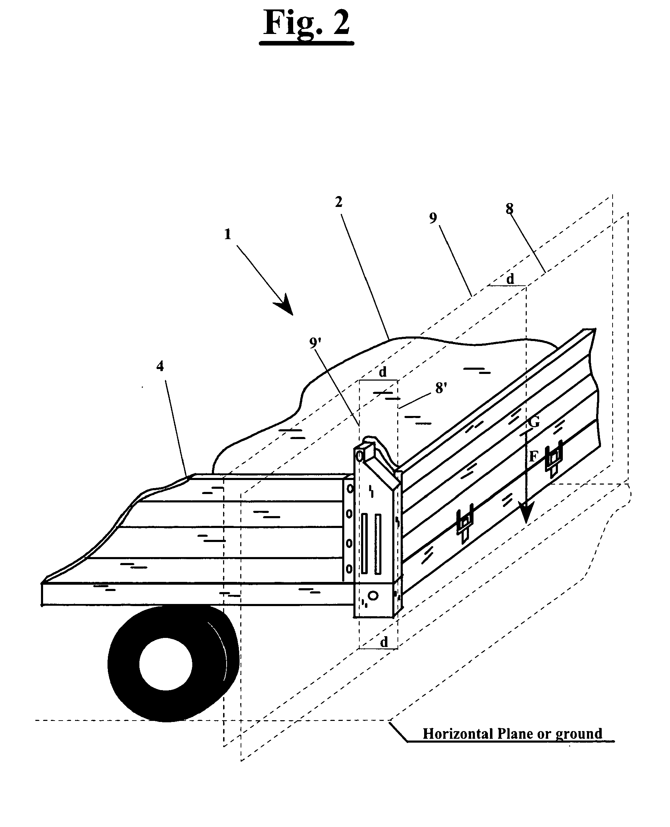

According to the present invention, a dump body 1 for vehicles is described in figure 1 and in figure 2. Generally speaking, a body has a rectangular or quadrangular shape and comprises a loading plane 2 delimited in correspondence of the edges by lateral sides. In particular the body comprises two lateral sides 4, a back side 3 and a front side. Only for descriptive simplicity, figure 1 and figure 2 simply represent a portion of the body in particular the portion comprising only the back side 3 and only one lateral side 4. It has been therefore omitted the representation of the second lateral side 4, placed in front of the one represented in figure 1 or 2, and the front side placed frontally respect to the back side and at the back of the vehicle's cab.

Only for the aim of descriptive accuracy, figure 1 represents also dumping means of the body 5 that are well known in the prior art and which are not object of the present invention. In detail, the represented solution, indicates a piston connected to the structural loading platform 6 of the vehicle at one of its ends and to the body 3 at the opposite end. The exiting or retraction motion of the piston allows to dump the body or to replace it in the transporting configuration. For such aim the body is pivoted to the structural loading platform 6 of the vehicle.

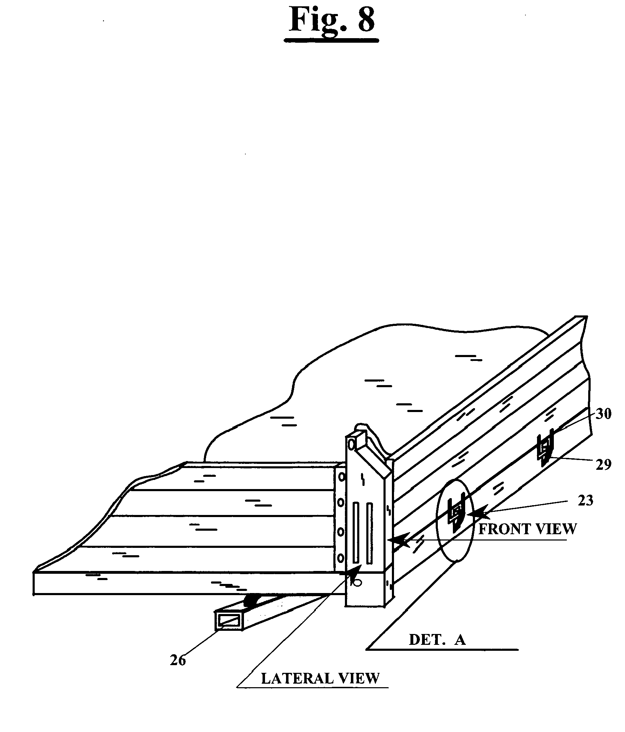

Figure 1 shows thus the condition where the body results dumped at the back in such a way to allow the emptying through the back side 3. figure 2 represents on the other hand the returning condition of the body into the transporting position or rather closed to the structural loading platform 6 of the vehicle. Still as highlighted in figure 1, the back side 3 is connected to a column 7 through a pivoting axis 18, in such a way to result tilting, or rather oscillating around said axis. According to such solution, thus, the side oscillates between an opening position in correspondence of the dumping of the body represented in figure 1 to allow the skidding of the material contained in it and a closing position, as the one represented in figure 2, where the side gets placed closed to the column when the body approaches the transporting position. Figure 8 represents also part of the lateral and frontal view of the column 7, other than closing means 23 (better detailed in the following description) to allow to maintain closed the side close to the column during the normal transportation.

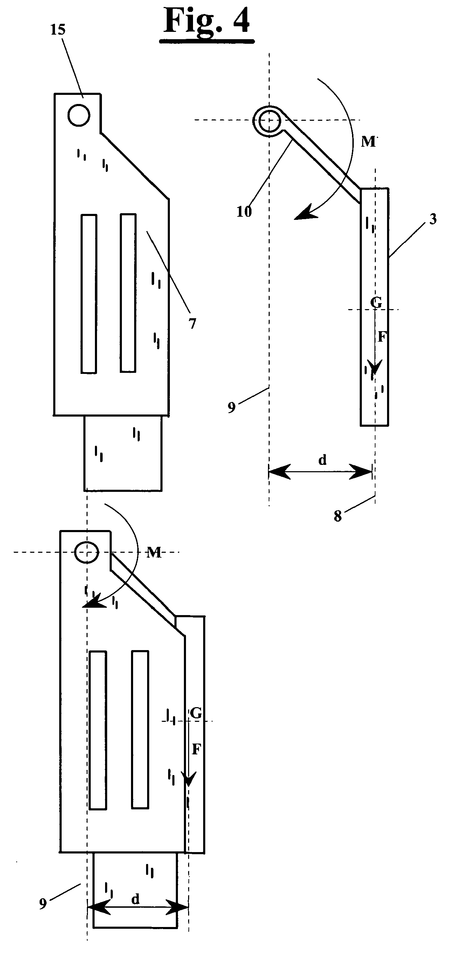

According to the present invention, as better described in detail of figure 4, the column 7 and the side 3 are configured and reciprocally arranged to each other in such a way that in correspondence of the transporting position of the body, or rather when the side gets placed close to the column, the barycentre **G** of the side results spaced of a predetermined arm **d** respect to the pivoting axis of the same side respect to the column. In such way, even in such transporting configuration, it is created a closing moment **M** that pushes the side constantly against the column.

More in detail, as better represented in figure 2, the above mentioned arm **d,** responsible of the rotational moment, measures a distance between the planes that are parallel to each other when the side close to the column is closed. In particular the distance **d** is comprised between the plane 9 (plane passing through the pivoting point 18 of the side, parallel to the side 3 and orthogonal respect to a horizontal plane or the horizontal ground) and the plane 8 (plane passing through the barycentre of the back side 3 and parallel to the mentioned plane 9, thus even that orthogonal to the ground). With the aim to clarify, the figure 2 represents also the right line 9' passing by the pivoting 18 and belonging to the plane 9, and the right line 8' belonging to the plane 8 in such a way to highlight the distance **d** directly on the pivoting. Obviously, being the two planes parallel, the distance **d** is equal in any point of the two planes. For such aim, figure 2 highlights the application of the weight force **F** in the barycentre **G** of the side and the mentioned arm **d** that determines the consequent rotational moment **M**.

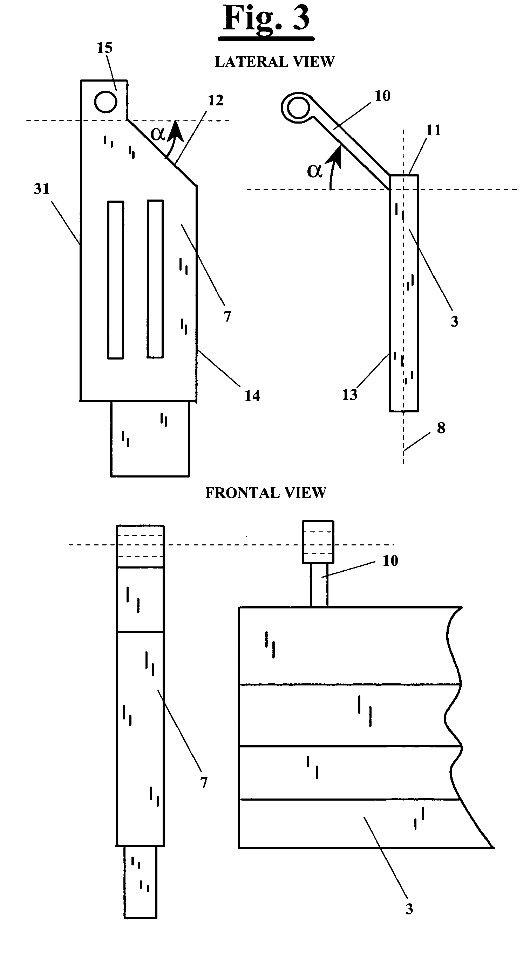

Figure 3 represents, in constructive detail, a possible configuration of the side 3 and of the column 7 in such a way that the mentioned condition is respected. In particular the side is given with an arm 10 placed in correspondence of the upper end 11 of the side. The arm, still as specified in the lateral view of figure 3, gets extended externally from the plane 8 according to a predetermined angle α of inclination calculated respect to a right line orthogonal respect to the face 13 of the side. Such inclination is required to place the arm 10 on the specific inclined face 12 of the column, interposed between the head 15 and face 14, in such a way that, in a normal transporting condition, the face 13 of the side is placed parallel to said mentioned face 14 of the column assuring a tight closing (as also indicated in figure 4). This assures a perfect verticality between the side and the structural loading platform 6 of the vehicle in the closing condition.

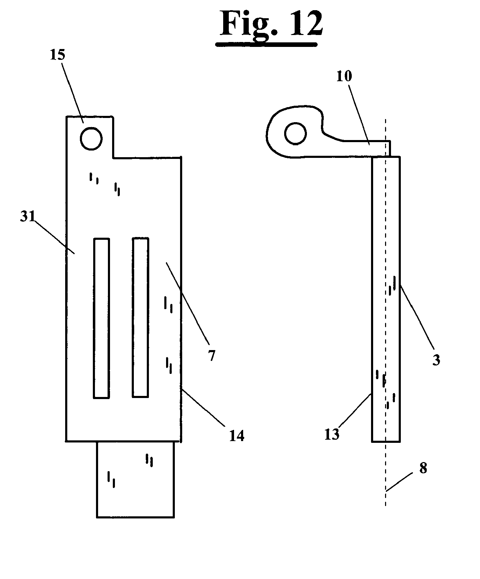

Obviously, without moving apart from the present inventive concept, different constructive solutions can be realized continuing anyway to obtain the above mentioned realization effect of a closing moment **M** that pushes the side against the post, even when the side is already closed to the same post. For example the column can be realized with a body that has a substantially rectangular shape (for such aim look at figure 12), and thus lacking of the front inclined face 12. The coupling to the side 3 results thus functional with the arm 10 that is no more inclined but exiting in an orthogonal manner respect to the same side but with a length such to realize still an arm **d**.

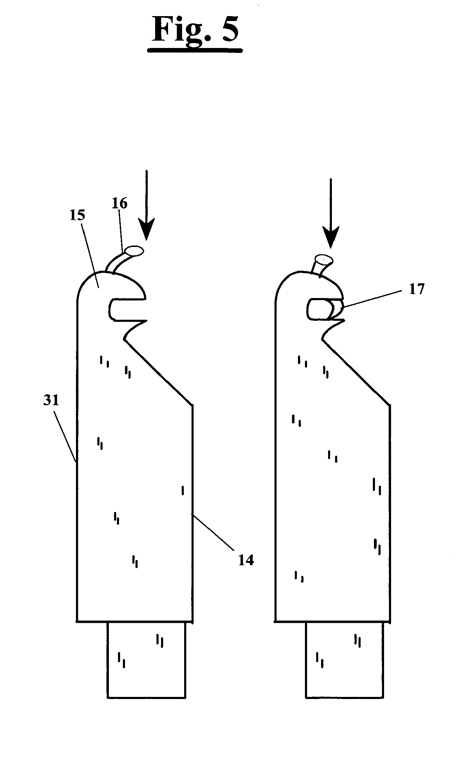

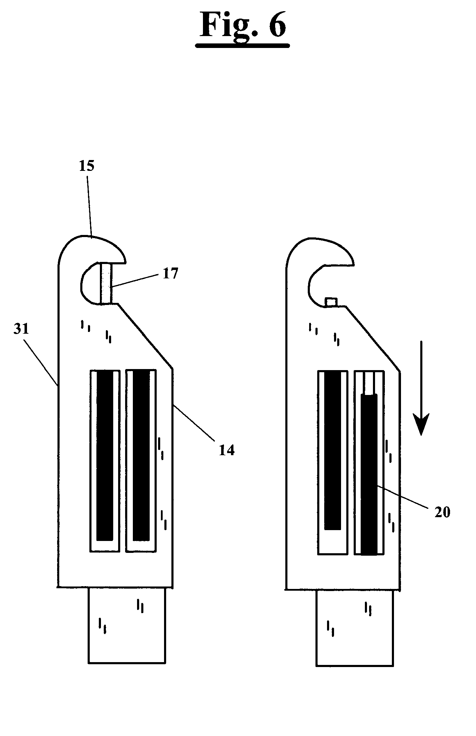

Figures 5 and 6 indicates other possible constructive solution regarding the column 7 finalized to the pivoting of the side. In particular the solution proposed in figure 5 indicates a column that has a starting lever 16 placed on the head 15, to allow to extract or retract a stopper 17 directly from the head. The lever is operated by pressure as indicated by the direction of the arrow in the figure. Obviously rotational driving can be thought without having to move apart from the present inventive concept.

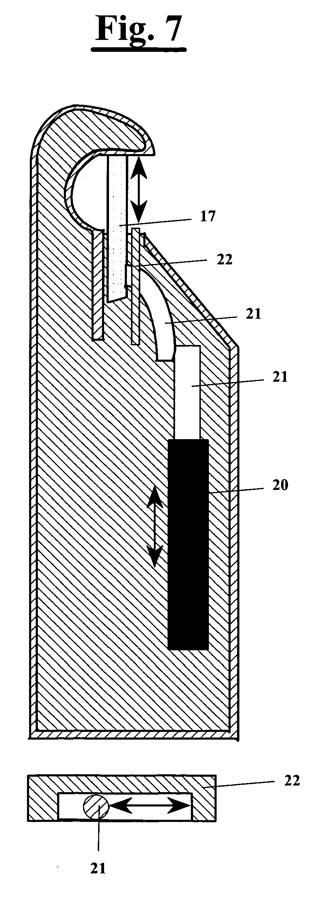

Figure 6 shows a further constructive solution where, on the other hand, the stopper 17 is lowered by means of the driving of the lever 20 accessible from the body of the column. Figure 7 shows a section of the column to highlight the above mentioned lever 20 which operated the retraction or lifting of the stopper 17. In particular an extension 21 is comprised between the lever 20 and the stopper 17 and drove by means of a guide 22. The detail of figure 7 highlights a section of such guide. By operating, thus, the lever towards the arrow indicated in figure it is determined the lowering and the lifting of the stopper 17.

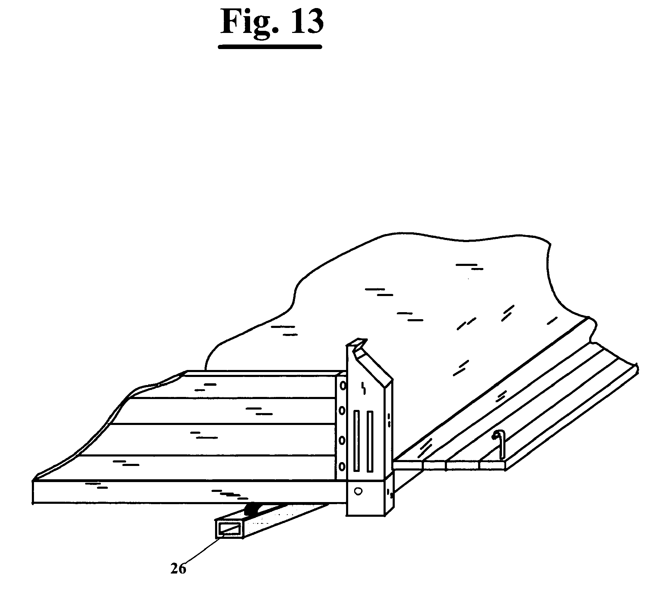

In the case of the configurations of the column with movable stopper (as described in figure 5 and 6), the arm 10, relative to the side, is provided with a rotational pin 18 that gets bound in use into the site realized by the stopper 17, further to its extraction, and the same head 15. Such solution results particularly advantageous in the case where it is desired to make such side not only tilting around said upper hinge 18 but, eventually, even revolving from below. In such case, by unhooking opportunely the pin 18 from the head 15, the side is free to rotate as indicated in figure 13. In such manner the side is made functional in a way to facilitate the loading of objects on the loading platform 2.

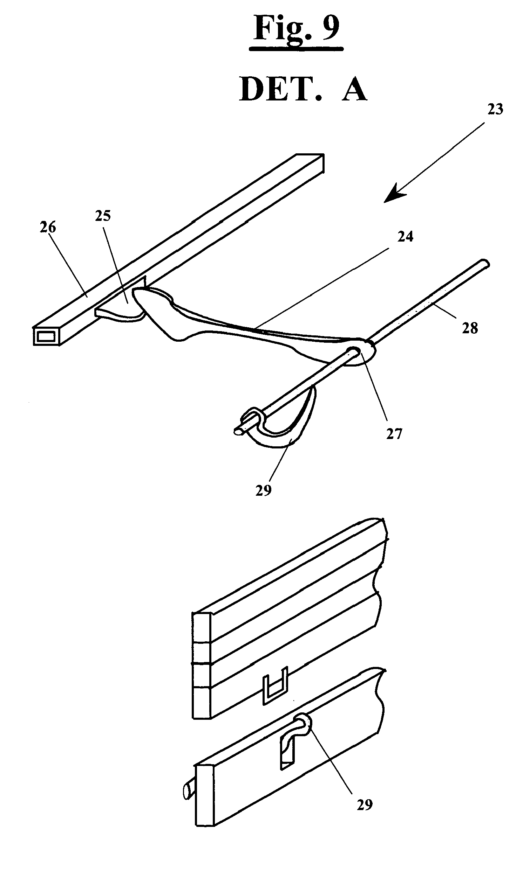

The blocking means 23, represented in view in figure 8, are better specified in the detail A of figure 9. In particular a cam 24 is coupled to a profile 25 obtained on a bar 26. The back end 27 of the cam 24, on the part opposite to the profile coupled to the bar 26, is integral to a torsional bar 28 that comprises at least a blocking hook 29.

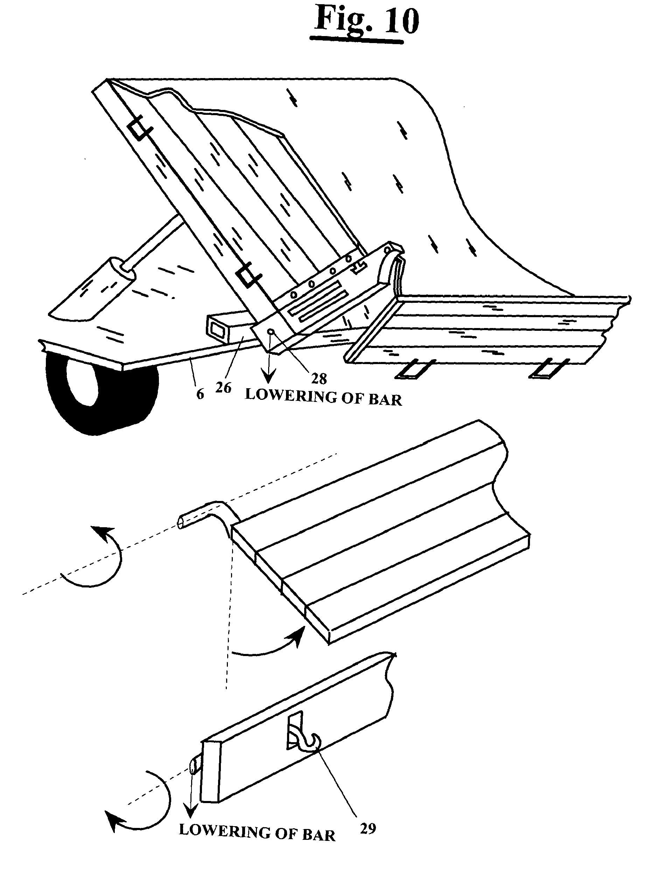

The bar 26 is assembled integral to the frame of the vehicle (for example figure 10 shows a connection to the structural loading platform 6 of the vehicle) while the torsional bar is connected in a revolving manner to the body downstream of its rotation line (figure 10 shows qualitatively a connection point of the bar 28 to the body).

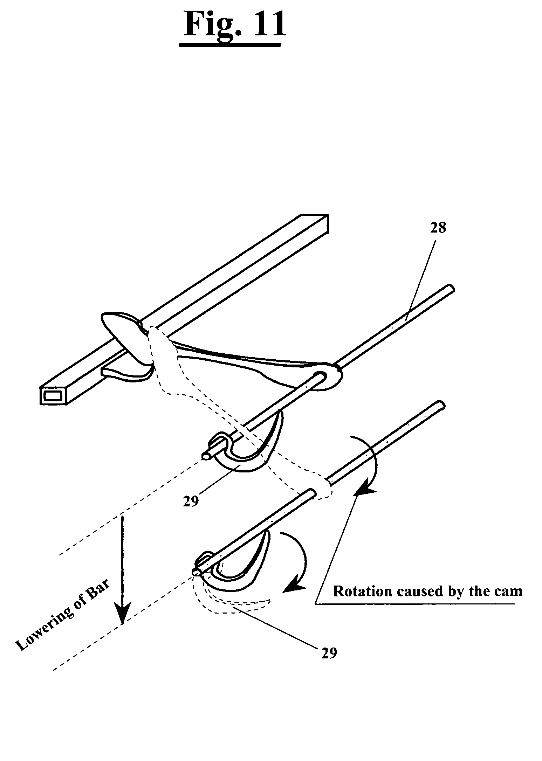

In such manner, when the body is in the transporting configuration, as indicated in figure 8, the coupling between the cam and the profile of the bar 26 is such to maintain the hooks 29 in the closing position respect to the eyelet 30 obtained on the side 3 (see also figure 9). The lifting of the body, as indicated in figure 10, determines a translation below of the torsional bar 28 respect to the loading platform 6, as indicated by the direction of the arrow in the figure. The cam, as indicated in figure 11, is thus dragged below the bar 28 and, thus, obliged to skid along the profile 25 of the bar 26. In such manner the cam carries into rotation the bar 28 and consequently even the hooks towards the opening. Figure 10 shows indeed, with the aim to clarify, both the rotation of the side further to the dumping of the body and the rotation towards the opening of the hooks 29. The rotation into the transporting configuration of the body brings back the hooks into the closing position.

From the functional point of view, thus, the present invention resolves the above listed technical problems. In particular, the combination between the side and the column such to create an arm **d** when the side is closed or almost closed near the column, allows to realize a moment that is favourable to the closing. In such manner, both in the condition of irregular ground, and in normal conditions, the closing results very functional, avoiding that the hooks 29 anticipate their rotation respect to the rotation of the side, missing this way the grip. Moreover also conditions of irregular rotation caused for example by dirt found in the pins are easily compensated.

From the above description it is deduced how, only and exclusively with the aim to clarify, it has been described and represented a single column-side unit relative to the body and comprising only the back column 7 and the back side. Obviously the description is to be intended automatically extended to the two back or lateral columns of the body. Indeed, without moving apart from the present inventive concept, the same concept can be equally applied to the lateral side in the case of lateral dump bodies.

The above mentioned description of a specific realization pattern is able to show the invention from the conceptual point of view in a way that others, by using the prior art, can modify and/or adapt in different applications such specific realization pattern without further researches and without moving apart from the present inventive concept and, thus, it is intended that such adaptations and amendments will be considered equivalent to the specific pattern realization. The means and material to realize the different described functions can be of various type without moving apart from the inventive concept. It is intended that the expressions or the used terminology have only the aim of describing and for this reason are not limiting.

## Claims

1. Dump body (1) for vehicles in general comprising at least a tilting side (3) and at least a column (7) to which the tilting side (3) is connected in a way that said tilting side (3) can oscillate between an opening position in correspondence of a turnover of the dump body (1) and a closing position close to the column (7) when the body reaches the transporting position and vice-versa and **characterized by the fact that** said column (7) and said side (3) are reciprocally arranged to each other in a way that in correspondence of said closing position of the tilting side (3) the barycentre **G** of said side (3) results spaced of a predetermined arm **d** respect to the pivoting axis of said side (3) respect to the column (7) such that the weight force **F** of the side (3) creates a closing moment **M** that pushes the side (3) against the column (7).

2. Dump body (1) for vehicles in general, according to claim 1, where said arm **d** is comprised between a plane (9) and a plane (8) that are respectively parallel, said plane (9) being passing by the point of pivoting (18) of the side to the column (7), parallel to the side (3) and orthogonal respect to the horizontal ground, and said plane (8) passing by the barycentre of the side (3).

3. Dump body (1) for vehicles in general, according to claim 1, where said column (7) comprises a pivoting head (15) for the side and said side (3) comprises at least an arm (10) configured in such a way that in said transporting position said barycentre **G** of the side results spaced of said arm **d** respect to the pivoting axis of the side to the column (7).

4. Dump body (1) for vehicles in general, according to claim 3, where said head (15) is placed near the back face (31) of said column.

5. Dump body (1) for vehicles in general, according to claim 4, where said column (7) comprises a front face (12) inclined of a α angle respect to a face (14), said front face gets extended from said head (15) towards the body being comprised between said head and said face (14) and said side (3) comprising an arm (10) inclined for a corresponding α angle in such a way that, in said transporting condition, the face (13) of the side results parallel respect to the face (14) of the column assuring a substantially tight closing.

6. Dump body (1) for vehicles in general, according to claim 5, where the arm comprises a slot for the insertion of a connection pin (18) to the column.

7. Dump body (1) for vehicles in general, according to claim 4, where the column (7) is of a substantially rectangular shape and said side (3) comprises an arm (10) exiting in an orthogonal manner respect to the side in such a way that, in said transporting condition, the face (13) of the side adheres to the face (14) of the column assuring a substantially tight closing.

8. Dump body (1) for vehicles in general, according to one or more of the previous claims, where said side (3) is the back side (3), said back side being connected respectively to a first (7) and to a second column (7) placed respectively at the two back angles of the body.

9. Dump body (1) for vehicles in general, according to one or more of the previous claims, where said side (3) is the lateral side (3), said lateral side being connected respectively to a first (7) and to a second column (7) placed respectively at the two lateral angles of the body.

10. Dump body (1) for vehicles in general, according to one or more of the previous claims, where said column (7) comprises, in correspondence of said head (15), a starting lever (16) to allow to extract or retract a stopper (17) from the head (15).

11. Dump body (1) for vehicles in general, according to one or more of the previous claims, where said column (7) comprises a lever (20) placed in the body of the column to operate the retraction or the lifting of the stopper (17) towards/from the head.

12. Dump body (1) for vehicles in general, according to one or more of the previous claim, where said arm (10) comprises pin (18) of connection to the column.

13. Side-column unit for dump body (1) for vehicles in general, said side-column unit comprising at least a tilting side (3) and at least a column (7) to which the side is connected in a way that the side can oscillate between an opening position in correspondence of a turnover of the body and a closing position near to the column when the body reaches the transporting position and vice-versa and **characterized by the fact that** said column and said side are reciprocally combined to each other in a way that in correspondence of said closing position of the side the barycentre **G** of the side results spaced of a predetermined arm **d** respect to the pivoting axis of the side of the column (7) in such a way that the weight force **F** of the side creates a closing moment **M** that pushes said side (3) against the column (7).
